**Europäisches Patentamt**

**European Patent Office**

**Office européen des brevets**

(19)

(11) Veröffentlichungsnummer: **0 169 432**
**B1**

(12) ## EUROPÄISCHE PATENTSCHRIFT

(45) Veröffentlichungstag der Patentschrift:
30.08.89

(51) Int. Cl.⁴: **F 41 H 5/04, B 32 B 7/12**

(21) Anmeldenummer: **85108449.1**

(22) Anmeldetag: **08.07.85**

(54) Geschosshemmendes Laminat.

(30) Priorität: **18.07.84 DE 3426458**

(43) Veröffentlichungstag der Anmeldung:
**29.01.86 Patentblatt 86/05**

(45) Bekanntmachung des Hinweises auf die Patenterteilung: **30.08.89 Patentblatt 89/35**

(84) Benannte Vertragsstaaten:
**AT BE CH DE FR GB IT LI NL SE**

(56) Entgegenhaltungen:
EP—A— 0 122 857
DE—A— 2 651 238
DE—A— 2 927 653
US—A— 2 697 054
US—A— 3 832 265
US—A— 4 181 768

(73) Patentinhaber: **Val. Mehler AG**
**Edelzellerstrasse**
**D-6400 Fulda (DE)**

(72) Erfinder: **Neidhardt, Helmut, Dr.**
**Eduard-Göbel-Strasse 6**
**D-6400 Fulda (DE)**
Erfinder: **Faust, Josef**
**Schlitzer, Strasse 44**
**D-6427 Bad Salzschlirf (DE)**

(74) Vertreter: **Görtz, Dr. Fuchs, Dr. Luderschmidt Patentanwälte**
**Sonnenberger Strasse 100 Postfach 26 26**
**D-6200 Wiesbaden (DE)**

## Beschreibung

Die Erfindung betrifft ein als Zwischenprodukt vorgesehenes Gewebe gemäß Anspruch 1, ein geschoßhemmendes Laminat gemäß Anspruch 4 sowie ein Verfahren zur Herstellung des Laminats gemäß Anspruch 14.

Schon bald nach der Entwicklung der hochfesten Aramidfasern hat man damit begonnen, Gewebe aus Aramidfasern, die in Festigkeit und Modul die vorher bekannten Chemiefasern weit übertreffen, auch auf ihre Verwendbarkeit als Schutzeinlagen zum Stoppen von Geschossen zu erproben. Dabei konnte im Vergleich zu Polyamidgeweben bei gleicher Halteleistung für verschiedene Geschosse ein wesentlich geringeres Gewicht verwendet werden bzw. wurden bei gleichem Gewicht deutlich bessere ballistische Leistungen erzielt. Für die Herstellung von Schutzwesten und ähnlichen Panzerungen gegen Geschosse traten erstmals mit den Geweben aus Aramidfasern Materialien auf, die bisher verwendeten Panzerungen aus Stahl gegenüber deutliche Vorteile bieten, nämlich günstigeres Gewichts-/Leistungsverhalten und zusätzlich die Vermeidung der Nachteile der Stahlpanzerwesten, die entweder starr und unbequem sind oder durch Schuppenaufbau keine flächenisotrope Halteleistung aufweisen und zudem noch Tragegeräusche und andere Unbequemlichkeiten verursachten.

Der heutige Stand der Technik besagt, daß man Schutzwesten herstellen kann, die als einziges Halteelement eine bestimmte Anzahl von Lagen aus Aramidgeweben aufweisen und in der Lage sind, Revolver- und Pistolenmunition mit Weichkern bis zu Geschwindigkeiten von etwa 500 m/s zu stoppen. Die erforderliche Lagenanzahl hängt dabei hauptsächlich von der Art des Gewebes, der Geschoßgeschwindigkeit und der Geschoßgestalt ab.

Durch zusätzliche Einschübe von Stahl entsteht aus der Kombination von Stahl und dahinter angeordneten Aramidgewebelagen ein kombiniertes Haltesystem, was im Vergleich zu Stahl alleine günstigere Eigenschaften aufweist und in der Lage ist (abhängig von der Dicke und der Art der verwendeten Stahleinschübe), Hartkernmunition aus Pistole oder — mit stärkerem Stahl — Weich- und Hartkernmunition abgeschossen aus Gewehren zu stoppen. Dabei hat das Aramidgewebe vor allem die günstige Eigenschaft, die durch den Aufprall bzw. das Durchdringen am harten Material verformten oder in Splitter zerlegten Geschosse gut aufzuhalten.

Bei der technischen Vervollkommnung der Herstellung von Schutzwesten aus Aramidgewebe wurde sehr bald festgestellt, daß die zum Auffangen einer bestimmten Geschoßart erforderliche Anzahl der Gewebelagen dann geringer angesetzt werden konnte, wenn sichergestellt war, daß die einzelnen Lagen mit möglichst geringem Abstand dicht aufeinanderliegend angeordnet waren. Diese dichte Lagenanordnung gerät zum Beispiel bei einer Lagenanzahl zwischen 15 und 30, wie sie für einschlägige Geschosse notwendig ist, während des Tragens der Westen in gewissem Umfang in Unordnung und insbesondere der erste gehaltene Schuß in ein solches Schutzpaket bewirkt, daß die Einzellagen sich erheblich gegeneinander verschieben und verwirren, so daß für den nächsten Treffer eine nur verminderte Halteleistung entsteht.

Deshalb wurde schon bald im Verlauf der Entwicklung dieser Schutzpakete herausgefunden, daß eine Befestigung der Lagen untereinander z. B. durch Vernähen, die Halteleistung insbesondere für zweite und folgende Schüsse verbessert, obwohl der Nähvorgang notwendigerweise ein Durchstechen der Gewebelagen an den Nahtstellen mit sich bringt. Für die Vernähung können z. B. Gitterraster mit Abständen zwischen 10 und 50 mm oder auch parallel verlaufende, Sinuskurven ähnliche Nähte verwendet werden (DE-A-29 31 110).

Derart durch Vernähen in glatt aufeinanderliegender Anordnung verfestigte Lagenpakete ergaben in der Folge ebenfalls noch Nachteile, weil sich bei ihrer Biegung zur Anpassung an die Körperform auf der dem Körper anliegenden Seite Materialstauchungen einstellen, die die einzelnen Lagen in einen deutlich größeren Abstand zueinander bringen. Im Extremfall kann dadurch die Gesamtdicke der Lagenpakete an den Stauchungsstellen verdoppelt werden. Als Folge hiervon ergibt sich eine verminderte Halteleistung, d. h. es treten im gewölbten Zustand Durchschüsse auf bei Lagenpaketen, die im ebenen Zustand keine Durchschüsse erleiden. Die sich nach innen bildenden Erhebungen führen außerdem zu einer gewissen Unbequemlichkeit während des Tragens. Es wurde deshalb vorgeschlagen (DE-OS-30 34 547), diesen Nachteil dadurch zu beheben, daß man die Vernähung der Lagen untereinander in spezieller Weise so vornimmt, daß durch den Nähvorgang die gewünschte, der Körperform angepaßte Gestalt faltenfrei und frei von Aufwölbungen entsteht (« Formsteppung »). Auf diese Weise wird erreicht, daß die der Körperform angepaßten Pakete die gleichen ballistischen Eigenschaften aufweisen, wie sie bei einem flachliegenden ebenen Paket vorhanden sind. Durch das Formsteppen ist die Schußweste am Körper des Trägers in der Gestalt vorfixiert, wie sie auch im Praxisfall des Beschusses die bestmögliche Halteleistung ergibt. Auch die Tragebequemlichkeit wird durch das Formsteppen erst ermöglicht.

Ein solches formgesteptes Paket zeigt beim Aufbiegen auf ebener Fläche dann natürlich die gleichen Nachteile durch Aufbauschung und Lagenentfernung auf der Außenseite, verbunden mit schlechterer Halteleistung, wenn man den Versuch macht, es im flachgelegten Zustand zu beschießen.

Es ist auch schon versucht worden, für die Anwendungsfälle, bei denen ein starrer Verbund kein Nachteil oder sogar notwendig ist, durch Verkleben der Lagen untereinander ein beschußhemmendes Paket herzustellen. Dabei stellt sich heraus, daß zunächst einmal durch die erforderliche Klebermenge

2

ein zusätzliches Gewicht entsteht, welches zur Halteleistung von Geschossen nichts beiträgt und daß darüber hinaus die Halteleistung gegenüber dem genähten oder nicht vernähten Zustand der Gewebe-Lagenpakete sogar vermindert wird.

Auch nach Art der GFK-Technik sind Lagenverbindungen von Aramidgeweben mittels Epoxid-, Polyester-, Phenol- oder PUR-Harzen schon versucht worden. Durch die starre Einbettung infolge der Durchtränkung der Gewebe bzw. Fäden entstehen jedoch auch hier neben der erheblichen Gewichtserhöhung durch den Harzanteil deutlich schlechtere Halteleistungen (DE-A-28 39 151, DE-A-31 19 786).

Von der Firma Du Pont, dem Hersteller von Aramidfasern, wurde bereits veröffentlicht, daß man versuchen soll, die Einbettung der harten Ballistikpakete mit einer nicht zu hohen Harzmenge (z. B. 22-38 %) zu bewerkstelligen, weil dadurch eine geringere Verschlechterung der Halteleistung im Vergleich zu lediglich aufgeschichteten Gewebelagen entsteht. In allen bisher bekannten Fällen besteht jedoch durch die Harzeinbettung ein wesentlich ungünstigeres Verhältnis von Halteleistung zu Gewicht, verglichen mit dem unbehandelten, aufgeschichteten Gewebelagenpaket oder dem vernähten Gewebelagenpaket.

Aus der DE-A-29 27 653, US-A-41 81 768 und EP-A-49 014 sind geschoßhemmende Laminatpakete aus einer Vielzahl von Gewebelagen aus Hochmodulfasern, insbesondere Aramidfasern, bekannt, die dadurch hergestellt wurden, daß zwischen die einzelnen Gewebelagen jeweils eine Folienlage aus Kunststoff, insbesondere Polyethylen (DE-A und EP-A) oder aus Polypropylen oder Polyester (US-A) gelegt wurde. Ein derart loses Paket wurde anschließend einer Druck- und Erwärmungsbehandlung ausgesetzt, wobei der Kunststoff verflüssigt und in die Hohlräume zwischen die Fäden des Gewebes hineingepreßt wurde.

Ein derart hergestelltes geschoßhemmendes Laminatpaket ist jedoch nicht ausreichend beschußsicher, da sich von Schuß zu Schuß die einzelnen Schichten zumindest partiell voneinander lösen, somit also eine Delamination des Pakets auftritt. Diese Delamination verschlechtert auch die Haltewirkung des Pakets selbst, so daß zur Herstellung eines schußsicheren Pakets die Lagen erhöht werden müssen, was jedoch aus Gewichtsgründen unerwünscht ist.

Der Erfindung liegt daher die Aufgabe zugrunde, ein Laminat der eingangs erwähnten Art so fortzubilden, daß es eine verbesserte Halteleistung im Vergleich zu aufgeschichteten, vernähten oder mit Harzen oder Kunststoffen getränkten Gewebelagenpakten aufweist.

Diese Aufgabe wird durch die kennzeichnenden Merkmale des Anspruchs 1, 4 und 14 gelöst.

Erfindungsgemäß wird ein Laminat zur Verfügung gestellt, das gegenüber den bekannten Schichtkörpern ein erheblich verbessertes Rückhaltevermögen gegenüber einem Auftreff-Impuls mit hoher Geschwindigkeit aufweist. Demzufolge können derartige Laminate mit einer erheblich geringeren Anzahl von Gewebelagen auskommen, so daß hierdurch das Gewicht dieser Laminate und auch die Herstellungskosten erheblich gesenkt werden können. Überraschenderweise konnte dies dadurch erreicht werden, daß eine möglichst geringe Bindemittelmenge zwischen den Gewebelagen vorgesehen ist, wobei die Gewebelagen zueinander den geringstmöglichen Abstand aufweisen und gleichzeitig der textile Gewebecharakter der Einzellagen so wenig wie möglich beeinträchtigt wird. Erfindungsgemäß wurde dabei festgestellt, daß die hohe Festigkeit und der hohe Modul der Aramidfasern im Verbund mit der hohen Einzelkapillarenzahl und ihrer Beweglichkeit zueinander die ausschlaggebenden Faktoren sind, die die Wirkung des Stoppens von Geschossen verursachen. Insbesondere die durch den Modul verursachte Zunahme der Festigkeit beim Auftreff-Impuls mit hoher Geschwindigkeit kann sich nur dann voll auswirken, wenn der größere Teil der Fäden und der weit überwiegende Anteil der Kapillaren noch eine lokale Beweglichkeit aufweisen.

Die für die Herstellung des Gewebes eingesetzten Aramidfäden bestehen üblicherweise aus mehreren hundert monofilen Filamenten oder Kapillaren, die mit oder ohne Drehung zu dem jeweiligen Faden zusammengefaßt sind. Erfindungsgemäß wurde festgestellt, daß lediglich die die Außenoberfläche des Fadens bildenden Filamente von dem Bindemittel belegt sein sollen, während die im Anschluß an die Außenoberfläche des Fadens angeordneten Filamente, die den Fadenkern bilden, im wesentlichen freibeweglich sein sollen, also nicht von dem Bindemittel erfaßt sind. Demzufolge ist der weit überwiegende Anteil der Filamente in einem röhrenartigen Netzwerk beweglich gehalten, während das Gesamtsystem der Gewebelagen in seiner Raum- oder Flächenstruktur fixiert ist.

Infolgedessen wird beim Aufschlag eines Geschosses ein Teil der Geschoßenergie durch das fixierte Raumnetzwerk und dessen Delaminierung aufgefangen, während der restliche Anteil durch die nicht fixierten, innenliegenden Filamente absorbiert werden kann, die infolge ihrer freien Beweglichkeit die Geschoßenergie absorbieren können.

Beim schichtweisen Aufbau des Laminats kann man erkennen, daß von der Trefferstelle des Geschosses ausgehende Fäden bis zu 20 mm ins Gewebe hinein deutlich verschoben sind.

Diese Absorptionsfähigkeit der erfindungsgemäßen Laminate stellt eine erhebliche Verbesserung gegenüber den bekannten Laminaten dar, die mit Bindemitteln völlig getränkt sind, d. h. bei denen der gesamte Faden mit Bindemittel durchsetzt ist. Wie sich erfindungsgemäß nun herausgestellt hat, weist ein solcher, mit Bindemittel getränkter Faden eine erheblich verschlechterte Rückhaltefähigkeit auf, was wohl darauf zurückzuführen ist, daß die Einzelkapillaren infolge ihrer Fixierung nicht mehr über ihre Gesamtlänge den Auftreff-Impuls abfangen können, was zu einem erheblich früheren Reißen der Einzelfilamente führt. Infolgedessen besitzen derartige getränkte Aramid-Fäden gegenüber Laminaten,

3

die aus losen Aramidgeweben bestehen, eine schlechtere Rückhaltefähigkeit.

Demzufolge wurde erfindungsgemäß ein Laminat aus einer Vielzahl von Gewebelagen mit einer geringen Menge an Bindemittel geschaffen, das so verfestigt ist, daß eine bestimmte Trennfestigkeit der Lagen untereinander erreicht wurde, die einerseits ausreicht, um einen dauerhaften Lagenverbund zu gewährleisten, die andererseits aber nicht zu hoch ist, so daß das auftreffende Geschoß in der Lage ist, am Ort des Auftreffens quasi eine Lage nach der anderen vom Laminat zu trennen und dabei seine Energie zusätzlich abbaut.

Weitere Einzelheiten, Merkmale und Ausführungsformen sind in der nachfolgenden Beschreibung unter Bezugnahme auf die Zeichnung erläutert.

Es zeigen :

Fig. 1 schematisch einen vergrößerten Ausschnitt eines Schnitts durch ein Gewebe mit Bindemittel, wobei lediglich eine Fadenrichtung gezeigt ist, und

Fig. 2 ein Laminat in ähnlicher Darstellung wie in Fig. 1, wobei lediglich drei Lagen im vergrößerten Ausschnitt zu sehen sind.

Zur Herstellung des Gewebes für die Laminatherstellung wird eine Aramid-Faser eingesetzt, wie sie beispielsweise von der Firma Du Pont unter der Bezeichnung KEVLAR oder von der Firma Enka AG geliefert wird. So lassen sich Aramid-Produkte von der Firma Du Pont der Typen KEVLAR 29 oder 49 vorteilhaft einsetzen. Derartige Aramid-Filament-Fäden weisen eine Vielzahl von Einzelfilamenten auf, wobei die Zahl der Filamente (Kapillaren) von 134-10 000 variieren kann.

Für die erfindungsgemäßen Zwecke hat sich dabei besonders das Aramid-Material KEVLAR 29 bewährt. In diesem Material wird vorteilhafterweise ein Faden eingesetzt, der zwischen 267 und 1 000, insbesondere etwa 666 Einzelfilamente (entsprechend 1 110 dtex) aufweist.

Andererseits lassen sich jedoch auch andere Fäden aus dem übrigen Aramidmaterial einsetzen. Das vorteilhafterweise eingesetzte KEVLAR 29 besitzt dabei eine Dehnungsfähigkeit von 4 %, bevor es bricht, und einen Elastizitätsmodul von 59 GPa.

Es lassen sich jedoch aber auch andere Hochmodulfasern einsetzen. Des weiteren können einige Fadenlagen oder Gewebelagen des Laminatpakets auch aus anderen synthetischen Fasern, z. B. Polyamidfäden, gebildet sein. Im Hinblick auf die Zielsetzung des Gewichts ist der alleinige Einsatz von Aramid-Fäden bevorzugt. Unter dem Gesichtspunkt der Kosten ist ein nicht aus Aramid-Fasern bestehender Anteil bis zu 25 Gew.-% möglich.

Mit dem vorstehend beschriebenen Aramidfadenmaterial wird in üblicher Weise ein Gewebe hergestellt, wobei vorteilhafterweise mit Leinwandbindung gearbeitet wird. Andererseits sind jedoch auch andere Bindungen möglich, beispielsweise die Panama-, Köper-, Satin-, Atlas-Bindung u. dgl., wobei sinngemäß entsprechend mehr Fäden pro cm benötigt werden, um im Vergleich zu der für Leinwand angegebenen Fadenzahl gleichdichte Gewebe zu erhalten.

Erfindungsgemäß hat es sich herausgestellt, daß man bei der bevorzugt eingesetzten Leinwandbindung eine möglichst dichtgedrängte Fadeneinstellung für die Herstellung der Basisgewebelagen wählt. Demzufolge kommen für das Weben in Leinwandbindung bei den einzelnen Titern (Laminaten) folgende Fadenanzahl (KEVLAR 29) in Frage :

| Titer | Mindestfadenzahl pro cm in Kette u. Schuß | optimale Faden- anzahl pro cm |
|---|---|---|
| 420 dtex | 16 | 19 |
| 1100 dtex | 11 | 12 |
| 1670 dtex | 9 | 10 |
| 2200 dtex | 8 | 9 |
| 3300 dtex | 7 | 9 |

Eine noch höhere Fadeneinstellung pro cm in den Geweben ist zwar in einigen Fällen webtechnisch gerade noch möglich, aber für die optimalen ballistischen Ergebnisse bereits schädlich, weil die bei noch stärkerer Verdichtung während der Herstellung eintretenden Fadenschädigungen die theoretische Festigkeitszunahme bei höherer Fadenanzahl nicht entstehen lassen.

Besonders vorteilhaft ist also ein Gewebe aus einem KEVLAR 29-Aramidfaden mit 1 100-1 250 dtex, wobei jeweils etwa 12 Fäden in Kette und Schuß/cm vorliegen.

Als Bindemittel sind Thermoplaste einsetzbar, die gegebenenfalls vernetzt werden können. Dabei ist zu beachten, daß die Viskosität des eingesetzten Bindemittels nicht zu gering ist, damit ein Eindrigen des Bindemittels in den Aramid-Faden unterbleibt. Dies gilt sowohl für den eventuellen Auftrag des Bindemittels auf die Oberflächen der Einzelgewebelagen als auch für die Schmelzviskozität beim Preßvorgang.

Es werden also polymere organische Bindemittel eingesetzt, die thermisch erweichen und gegebenenfalls danach thermisch aushärten. Mit Vorteil werden solche Bindemittel eingesetzt, die bei Raumtemperatur im wesentlichen trocken (nicht klebrig) sind, so daß die Gewebe mit Bindemittelauflage bzw. Zwischenschichten für die Laminatherstellung gelagert und problemlos weiterverarbeitet werden können.

Die Aufbringung des Bindemittels auf das Gewebe kann ein- oder beidseitig aus Lösung oder Dispersion erfolgen, wobei das Lösungsmittel bzw. Wasser völlig herausgetrocknet wird.

Neben der Auftragung eines flüssigen Bindemittels ist auch ein Trockenauftrag möglich, beispielsweise die Auftragung eines Bindemittels in Form einer Folie, die mittels heißer Kalanderwalzen auf das Gewebe aufgetragen wird. Üblicherweise wird bei diesem Vorgang eine Folie aus einem entsprechenden Bindemittel in den nachstehend erwähnten Mengenangaben pro Oberfläche des Gewebes auf das Gewebe vorher auflaminiert bzw. in doppelter Dicke zwischen die Gewebelagen vor dem Laminiervorgang eingelegt. Zum Einlegen zwischen die Gewebelagen eines Laminatpakets eignen sich auch vorzüglich Folien mit nicht vollflächiger Struktur, beispielsweise Folien in Netz- oder Gitterform.

Schließlich sind auch Vliese mit thermisch erweichbaren Fasern (Schmelzfasern) zur Herstellung der Bindung in bestimmten Fällen gut geeignet.

Bei diesen Auftragungsverfahren ist jedoch festzustellen, daß die erfindungsgemäßen Vorteile nur dann erzielt werden, wenn die nachstehend angegebenen Mengeneinheiten Bindemittel je Oberflächeneinheit des Gewebes im Laminat eingehalten werden.

Zu einsetzbaren Bindemitteln gehören thermisch erweichbare Harze, wie Polyethylen, Polyvinylharze, wie PVC, PVA u. dgl., Polymethylmethacrylat, Polyacrylate, Polycarbonat, Nitrilkautschuk, Polyisobutylen, Polyurethane, Polyamide, und deren Copolymerisate.

Als vorteilhaft hat sich gelöstes, streichfähiges Polyacrylat erwiesen.

Neben den vorstehend erwähnten Thermoplasten können jedoch auch thermisch härtbare Polymere eingesetzt werden, beispielsweise Polyurethane oder Phenolharze.

Das Bindemittel ist lediglich für räumliche Anordnung und Fixiezrung vorgesehen. Die Rückhaltefähigkeit eines Laminats für Geschosse wird im wesentlichen durch die Aramidkapillaren, durch die Art der Auftragung des Bindemittels auf die einzelnen Aramid-Fäden und den Delaminier-Vorgang der einzelnen Lagen bestimmt. Demgemäß spielt also die Art des Bindemittels eine eher nachgeordnete Rolle, obwohl es auch auf die Hafteigenschaften des Bindemittels an der Aramidoberfläche und die Elastizität des Bindemittels ankommt. Insofern sind Bindemittel mit höhere Elastizität gegenüber Bindemitteln mit einer geringeren Elastizität bevorzugt. Des weiteren sind die Bindemittel bevorzugt, die eine hohe Haftfähigkeit an der Oberfläche des Aramid-Fadens aufweisen.

Die erfindungsgemäßen Versuche zur Ermittlung der wirksamen Bindemittelmengen haben gezeigt, daß für die Erreichung der erfindungsgemäßen Ergebnisse sehr enge Grenzen eingehalten werden müssen. Dabei stehen zwei Parameter im Vordergrund, nämlich die Bindemittelmenge im Laminat und der Druck, mit dem die zu laminierenden Gewebelagen zusammengepreßt werden müssen. Daneben ist jedoch aber auch die Temperatur, bei der das Schmelzen des Bindemittels einsetzt bzw. der Verfestigungsvorgang des Bindemittels stattfindet und die Zeit zu beachten, innerhalb derer der Laminationsvorgang stattfindet.

Es wurde bei den Geweben, die mit handelsüblichen Aramid-Fäden hergestellt worden sind, festgestellt, daß die besten Geschoßhalteleistungen dann erhalten werden, wenn z. B. zwischen zwei Lagen eines Gewebes mit je 12 Fäden in Kette und Schuß/cm aus 1 100 dtex, die je etwa 250-270 g wiegen, zwischen 20 und 30 g Bindemittel/m$^2$ zum Einsatz kommen, d. h. auf jeder Seite des Gewebes wird vorteilhafterweise 10-15 g Bindemittel aufgebracht. Dies bedeutet, daß etwa 7-13 Gew.-% Bindemittel, bezogen auf das Gesamtgewicht des Laminats, insgesamt zum Einsatz kommen soll.

Eine geringere Menge von unter 7 % Bindemittel im Verhältnis zum Laminatgewicht ergibt meist eine geringere Haftung, was zu schlechteren Halteleistungen führen kann. Außerdem ist die ordnungsgemäße, gleichmäßige Aufbringung solch geringer Mengen gegebenenfalls technisch problematisch.

Ein ausgezeichnetes Rückhaltevermögen wird für einen Mengenanteil von 7-13 Gew.-% Bindemittel, bezogen auf das Gesamtgewicht des Gewebes bzw. des Laminatpakets, erhalten, wobei insbesondere ein Mengenanteil von 7-9,5 Gew.-% zu nennen ist.

Mengen über 13-20 Gew.% Bindemittel, bezogen auf das Gesamtgewicht des Laminats, ergeben bereits einen deutlichen Abfall der Beschußhalteleistung, sind aber u. U. bei strukturierter Geweborberfläche im Hinblick auf die Gleichmäßigkeit der Aufbringung über Länge und Breite der einzelnen Gewebelagen des Laminatpakets notwendig, nicht jedoch bevorzugt.

Wie bereits vorstehend erwähnt, kann das Bindemittel mit den üblichen Verfahren auf die beiden Oberflächen des Aramidgewebes aufgetragen werden, beispielsweise kann eine Lösung des Bindemittels mit einer entsprechenden hohen Viskosität verwendet werden, um eine gute Verankerung zu erreichen und ein zu tiefes Eindringen über die Randlagen der Fadenkapillaren hinaus zu vermeiden. Dabei ist zu berücksichtigen, daß im Spezialfall bei der einen oder anderen Art des Bindemittels bzw. der Aufbringungsform des Bindemittels das Mengenoptimum des einzusetzenden Bindemittels sich etwas verschieben kann.

Das beschichtete Gewebe wird entsprechend dem Einsatzzweck zugeschnitten und die zugeschnittenen gewebelagen werden übereinander gestapelt und in eine an sich bekannte beheizbare Formpresse gelegt. Diese Formpresse kann das Laminatpaket in sämtliche gewünschten Formen verpressen, so daß also ebene Laminate, monoaxial ausgerichtete Laminatpakete (gekrümmte Schilde, Panzer u. dgl.) und dreidimensional ausgerichtete Laminate (Helme u. dgl.) hergestellt werden können. In einer derartigen Formpresse wird das noch nicht verfestigte Laminat, bestehend aus den übereinander geschichteten, mit Bindemitteln versehenen Aramidfasergeweben, unter einem bestimmten Druck zusammengepreßt und gleichzeitig auf die Laminierungstemperatur erhitzt.

Es wird dabei ein solcher Druck gewählt, daß die Gewebelagen bzw. die Fäden möglichst eng aneinanderliegen, wobei jedoch insbesondere darauf geachtet wird, daß keine Durchdringung der Fäden mit dem geschmolzenen Bindemittel stattfindet. Bereits mit einem Druck von etwa 3 bar werden brauchbare Laminatergebnisse erhalten. Die besten Ergebnisse liegen in einem Bereich von 8-20 bar. Darüber hinausgehende Drücke bringen keine Verbesserung des Effekts ; vielmehr tritt eine Verschlechterung der Rückhalteleistung ein, wenn gleichzeitig die Bindemittelmenge im mittleren oder oberen Bereich, d. h. oberhalb 10 Gew.% liegt, weil bei zu hohem Druck dann zuviel Bindemittel in die Zwischenräume der Kapillaren der Fäden eingepreßt wird und damit der unbenetzte Kapillarenanteil im Gewebe sinkt. Dieser unverfestigte Kapillarenanteil soll, bezogen auf die Querschnittsgröße des Fadens, wenigstens etwa 60 %, vorzugsweise > 75 % betragen.

Festzustellen ist also, daß ein zu hoher Druck oder eine zu hohe Temperatur beim Pressen des Laminats zu einer Durchtränkung der aus den Einzelfilamenten bestehenden Aramidfäden, also zu einer Imprägnierung dieser Fäden führen, was für die Halteleistung nachteilig ist.

Die Übertragung der Wärme kann durch entsprechend vorgeheizte Platten der Presse oder auch durch Anregung mittels Hochfrequenz oder Mikrowellenenergie erfolgen. Dabei wird die Temperatur so gewählt, daß das Bindemittel sicher erweicht und fließfähig wird bzw. aushärtet, sofern ein aushärtbares Harz eingesetzt wird. Im allgemeinen werden Temperaturen zwischen 120 und 180 °C, vorzugsweise 150-170 °C, eingesetzt. Dabei ist zu berücksichtigen, daß die Temperatur natürlich von der Art des eingesetzten Bindemittels abhängt. Sofern ein derartiges Bindemittel bei höheren oder tieferen Temperaturen schmelzen sollte bzw. aushärten sollte, können natürlich entsprechend höhere oder tiefere Temperaturen eingesetzt werden. Der bevorzugte Bereich gilt für das erfindungsgemäß bevorzugte Polymerisat.

Die Verweilzeiten in der beheizten Presse hängen im wesentlichen von der Heizzeit ab, die durch die Art des Bindemittels und in gewissem Umfang durch die Lagenanzahl des zu laminierenden Pakets beeinflußt wird. Dabei ist insbesondere das Wärmeleitvermögen dieses Pakets zu berücksichtigen, das den Schmelz- bzw. Aushärtungsvorgang im Paket beeinflußt. In jedem Fall muß sichergestellt sein, daß das Bindemittel in jeder Schicht völlig aktiviert wird. Üblicherweise sind Verweilzeiten von 5-12 Minuten bei konventionell beheizter Presse notwendig, damit in der Mitte des Laminatpakets die Temperatur erreicht wird, die zum Fließen des Bindemittels bzw. bei vernetzenden Bindemitteln zum Start des Vernetzungsprozesses erforderlich ist. Hinzu kommt noch eine Abkühlzeit von etwa 10-15 Minuten auf wenigstens unter 80 °C, bevor der Entformungsvorgang, also die Entlastung der Presse eingeleitet werden kann.

Eine derartige Verweilzeit kann natürlich erheblich verringert werden, wenn ein Bindemittel eingesetzt wird, das mittels Hochfrequenz- oder Mikrowellenenergie geschmolzen werden kann.

Wie bereits vorstehend erläutert, lassen sich die oben beschriebenen Laminatpakete nicht nur als ebene Platten sondern auch in sphärischer Gestalt herstellen ; hierbei muß durch geeignete Einrichtungen, beispielsweise eine Presse mit entsprechend geformten Druckplatten, dafür gesorgt werden, daß eine möglichst gleichmäßige Wärmeübertragung und eine möglichst isostatische Druckverteilung gewährleistet ist. Die so hergestellten gewölbten oder abgewinkelten Laminatpakete haben prinzipiell die gleichen günstigen Eigenschaften wie die flächigen Pakete.

Bei der Herstellung in der Presse ist es wichtig, daß das Laminatpaket vor der Druckentlastung weitgehend abgekühlt wird. Hierdurch sollen die Gewebelagen in ihrer gepreßten Form erhalten bleiben, ohne daß sie sich auseinanderschieben können. Das nach dem Abkühlen entnommene Laminat hat dann noch eine Dicke von etwa 50-80, vorzugsweise 60-75 % der vorher geschichteten Lagen und weist gegenüber diesen Lagen eine deutliche Versteifung auf. Es ist jedoch unter kraftaufwendung noch ein wenig elastisch verformbar. Vorteilhafterweise weist das so behandelte Laminatpaket einen Luftanteil (abzüglich des Bindemittelanteils) in komprimierter Form zw. 10-25, vorzugsweise 15-20 Vol.% auf.

Beim Einschneiden in das so erhaltene Laminatpaket kann man aufgrund der Beschaffenheit der Schnittkante feststellen, daß noch ein erheblicher Teil von Faserkapillaren in den Gewebelagen beweglich bleibt und als wolliger Faserfilz (Flauschbart) über die Schnittkante hinausragt. Dies ist ein wesentliches Kriterium der Erfindung, was auch dadurch zum Ausdruck kommt, daß das erfindungsgemäß hergestellte Laminat sich nicht sonderlich gut schneiden oder sägen läßt. Dies steht im völligen Gegensatz zu den Laminatpaketen, die mit Bindemittel getränkt worden sind. Derartige voll imprägnierte Laminatpakete lassen sich wie ein Stück Holz sägen oder schneiden, ohne daß an den Rändern Flauschbärte auftreten. Dies ist bereits daraus ersichtlich, daß die Schnittkanten derartiger Pakete oft vollständig glatt sind.

Ein derart hergestelltes Laminatpaket weist eine verbesserte Halteleistung für Geschosse auf im Verhältnis zu den bisher bekannten Laminatpaketen aus Aramid-Fäden. Hierdurch kann die Lagenzahl für eine definierte Halteleistung vermindert werden. Ein genauer Vergleich zur Ermittlung der Leistungssteigerung ergibt, daß ein Beschuß mit 9 mm Parabellum-Weichkern-Munition und einer mittleren Geschwindigkeit von 420 m/sec (entspricht einer Mündungsenergie des Geschosses von 706 Joule) mit Sicherheit von einem Laminatpaket gehalten wird, das 16 Gewebelagen aufweist und auf die erfindungsgemäße Weise mit dem Bindemittel versehen ist. Demgegenüber müssen die Aramidgewebestapel des Standes der Technik entweder 22 Lagen (vernäht) oder 26 Lagen (aufgeschichtet) aufweisen, um zu der gleichen Halteleistung zu kommen.

Die Möglichkeiten zur Herstellung biaxial gewölbter Laminatpakete sind infolge des geringen Dehnungsvermögens der Kevlargarne bzw. -gewebe begrenzt ; wenn die Krümmungsradien der Wölbung in beiden Richtungen 200 mm werden, sind ggf. Patchworktechnik/Einschnitte erforderlich, um selbst bei ideal isostatischem Druck die optimalen Verpressungen der Laminate zu erreichen.

Die Anwendung der vorstehend beschriebenen Laminate aus Aramid-Gewebelagen als alleiniges Element zum Halten von Geschossen kommt vor allem dann in Frage, wenn Weichkerngeschosse mit Vollmantel, Teilmantel oder auch mantellos — abgefeuert aus Revolvern, Pistolen und Maschinenpistolen — bis zu einer Geschwindigkeit von ca. 450 m/s gestoppt werden sollen. Je nach Art, Form, Gewicht und Geschwindigkeit der Weichkerngeschosse werden Laminate mit einem Gewicht zwischen 4,0 und 7,5 kg/m² verwendet.

Flächen dieses oben beschriebenen Laminat-Aufbaus können mit Vorteil verwendet werden, z. B. für Verstärkungen bzw. Auskleidungen in Fahrzeugen, Türen und Verkleidungen aller Art, Gehäusen von technischen Geräten, als Einschübe in Schutzwesten, als geschoßstoppende Einlagen in Aktentaschen und Koffern, als Schreibunterlagen (Kladden) für Polizeibeamte, als Schutzschilde für Polizei und Militär, sowie als — ggf. mobile — Schutzwälle zur Abdämmung der Splitterstreuung bei Sprengkörpern aller Art ; als Schutzhelme aller Art und als Einschübe in Kunststoffe, Holz oder Metallprofile.

Die erwähnten Weichkerngeschosse werden beim Haltevorgang im Laminatpaket stark verformt (normalerweise abgeplattet), wodurch sich die Auftreff-Fläche quasi vergrößert und der Haltevorgang begünstigt wird. In prinzipiell gleicher Weise werden natürlich auch die Bruchstücke (Splitter) von Sprengladungen, Bomben, Explosivgeschossen und Handgranaten gestoppt, sofern ihre Geschwindigkeit (bzw. Auftreffenergie) im Rahmen der Halteleistung für Geschosse liegt.

Zum Aufhalten von Hartkerngeschossen aus Faustfeuerwaffen mit Geschwindigkeiten bis zu ca. 600 m/s sind diese Laminatpakete im Prinzip ebenfalls geeignet. Es müssen jedoch hierfür wesentlich größere Dicken (22-40 mm), (wesentlich mehr Einzellagen (70-120) des Laminats) bzw. Gewichte von ca. 20-35 kg/m² angewandt werden, so daß die hohen Kosten solcher Pakete trotz günstigen Gewichts ggf. wirtschaftlich gegen Kombinationen aus Stahlplatten und/oder Keramikplatten mit Kevlar-Gewebe-Paketen und/oder Laminatpaketen nicht bestehen können.

Die beschriebenen Laminatpakete eignen sich jedoch vorzüglich als Konstruktionselement zur Herstellung von Verbundplatten mit Stahl- und/oder Keramikplatten auf der Außenseite. Dabei bilden die Laminat-Pakete die Basisplatte, auf die die harten Geschoßwiderstandselemente aufgeklebt oder in sonst geeigneter Weise befestigt sind. Solche Verbundplatten mit gehärtetem Spezialstahl oder Keramikplattten aus $Al_2O_3$, Siliziumcarbid, Siliziumnitrid, Borcarbid oder Bornitrid sind geeignet, mit einem Gewicht von 25-50 kg/m², Weichkern- und auch Hartkerngeschosse — abgefeuert aus Gewehren mit Geschwindigkeiten zwischen 800 m/s und 1 250 m/s — in der Weise zu stoppen, daß kein Geschoßaustritt erfolgt und lediglich das rückseitige Laminatpaket aus Aramidgewebe eine leichte Beule (10-20 mm) erleidet oder — falls das Geschoß doch austritt, dessen Restenergie nur noch so gering ist, daß es in einem dahinter angeordneten Paket aus Aramidgewebelagen gehalten wird. Insbesondere ist die Verwendung der erfindungsgemäßen Laminatpakete als Basisplatte für Keramik-Armierungen vorteilhaft im Vergleich zur Anwendung von Basisplatten aus metallischem Hartaluminium, oder von Kunststoff-eingebetteten Glasfasergeweben oder von Basisplatten aus Hartholz/Sperrholz.

Die erfindungsgemäßen Laminate aus Aramidgeweben sind insbesondere auch gegen die Einwirkung von Hieb- und Stichwaffen erheblich vorteilhafter als geschichtete oder miteinander vernähte Pakete aus Aramidgewebelagen.

Eine vorteilhafte Ausführungsform der Laminatpakete für die Herstellung von Schutzwesten zum Personenschutz ist dadurch gegeben, daß man aus den Aramidgeweben Schutzeinlagen für Schutzwesten in der Weise herstellt, daß die geraden bzw. nur leicht gewölbten Flächen im Brust- und/oder Rückenbereich analog zur Körperform als Laminat in erfindungsgemäßer Weise verpreßt werden, während die überstehenden Flächen, die in die Seitenflächen des Körpers bzw. in die Arm- oder Schulterpartien hineinragen, unverpreßt und deshalb bequem und flexibel bleiben. Diese überstehenden Flächen können ggf. zusammen mit zusätzlichen Gewebelagen — zur Erzielung der gleichen Halteleistung wie in den laminierten Bereichen — dann anschließend gitterartig oder ähnlich miteinander vernäht/versteppt werden, wobei zweckmäßigerweise die Vernähung als « Formsteppung » analog zur Körperwölbung vorgenommen wird.

Schutzwesten-Einlagen, die auf diese Weise genau der Körperform folgend ausgebildet sind und in den nur wenig geformten Flächen aus erfindungsgemäßen Laminat bestehen, haben entweder den Vorteil einer verbesserten Schutzwirkung in den laminierten Zonen — falls die Lagenanzahl der Aramidgewebe überall gleich ist — oder den Vorteil eines insgesamt geringeren Gewichtes, falls das Schutzniveau auf der gesamten Fläche gleich bemessen wird, weil dann die laminierten Zentralflächen aus einer geringeren Lagenzahl gebildet werden. Außerdem entsteht hierbei der Vorteil, daß die Geschoßtreffer auf die Laminat-Flächen eine im Vergleich zu den vernähten Flächen deutlich geringere Einbeulung in den Körper — bzw. den Plastillin- oder Seifenblock beim Testbeschuß — bewirken.

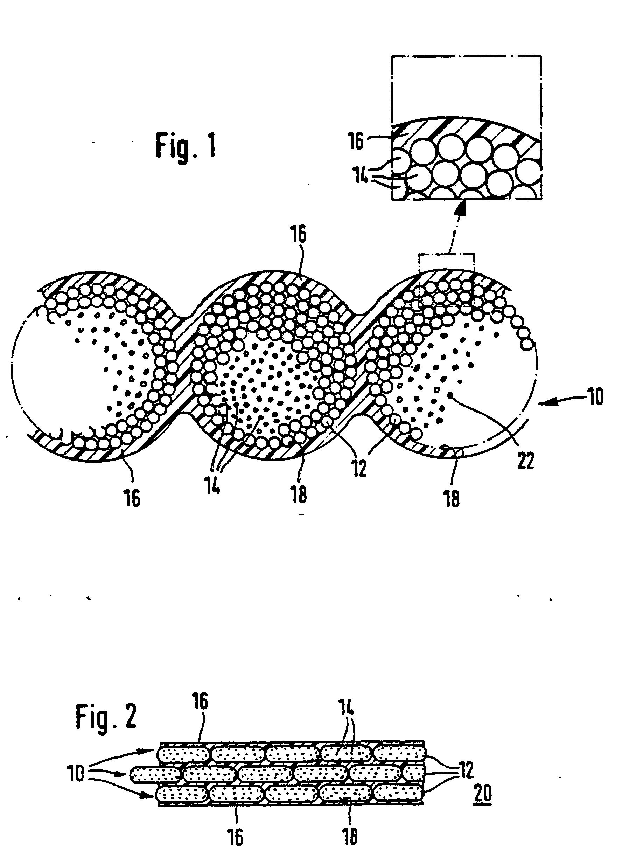

In Fig. 1 ist eine mit Bindemittel belegte Gewebebahn mit 10 dargestellt. Hiervon sind lediglich die Schußfäden 12 ersichtlich, die aus einer Vielzahl von Kapillaren 14 bestehen. Die Fäden 12 sind in eine Bindemittelbeschichtung 16 eingepackt, die — wie aus Fig. 1 ersichtlich ist — lediglich den Randbereich 18 des Fadens 12 bedeckt. Demzufolge sind sie innerhalb des Randbereichs 18 liegenden Kapillaren 14 unbedeckt und können sich in dem rohrartigen Kanal, der durch den ringförmigen Randbereich 18 gebildet wird, sowohl gegeneinander als auch in ihrer Längsachse über einen längeren Bereich frei bewegen.

In Fig. 2 ist ein Laminatpaket 20 gezeigt, das aus mehreren beschichteten Gewebelagen 10 besteht. Aus dieser Darstellung ist ersichtlich, daß das Bindemittel 16 ebenfalls nur in den ringförmigen Randbereich beim Preßvorgang eingedrungen ist, nicht jedoch in den Fadeninnenraum 22.

Die Beispiele erläutern die Erfindung. Sofern nicht anders angegeben, beziehen sich Teile auf das Gewicht.

## Beispiel 1

Es wird aus KEVLAR 29 (1100 dtex, 666 Einzelkapillaren ; keine Fadendrehung) ein Gewebe hergestellt, das jeweils 12 Fäden in Kette und Schuß/cm aufweist. Das Gewicht des Gewebes beträgt etwa 250 g/m² ohne Belegung mit Bindemittel.

Ein Teil dieses Gewebes bleibt ohne Bindemittelbeschichtung, während der übrige Teil des Gewebes mit dem Bindemittel folgendermaßen beschichtet wird :

Eine Gewebebahn wird durch eine Textilbeschichtungsmachine geführt, in der auf die Gewebebahn eine Lösung eines selbstvernetzenden Acrylharzes in einer solchen Menge aufgetragen wird, daß nach der Entfernung des Lösungsmittels auf jeder Seite der Gewebebahn etwa 12 g Bindemittel aufgetragen sind. Die Auftragung erfolgt im wesentlichen druckfrei und mit einer derart viskosen Lösung, daß keine Imprägnierung der Aramid-Faser stattfindet. Nach dem Trocknen (Entfernen des Lösungsmittels) liegt die beschichtete Gewebebahn in trockener (nichtklebriger) Form vor und kann auf eine Rolle aufgewickelt und später weiterverarbeitet werden.

Eine derart beschichtete Gewebebahn läßt sich in ähnlicher Weise wie eine unbeschichtete Gewebebahn schneiden, wobei sich an den Schnitträndern Flauschbärte bilden, die auf ungebundene Kapillaren des Aramidfadens zurückzuführen sind.

## Beispiel 2

Eine beschichtete Gewebebahn gemäß Beispiel 1 wird in mehrere gleichgroße Stücke geschnitten, wobei die erhaltenen Gewebelagen übereinander geschichtet und anschließend in einer beheizbaren Presse auf eine Temperatur von 160 °C beheizt und einen Druck von etwa 10 bar gebracht werden. Man setzt die Behandlung solange fort, bis auch die in der Mitte liegende Lage sicher auf diese Temperatur erwärmt worden ist. Im allgemeinen sind hierfür bei 16 Lagen ca. 3-5 Minuten notwendig.

Anschließend wird die Form auf Raumtemperatur abgekühlt, wobei der Druck beibehalten wird. Erst dann wird das Laminatpaket entlastet und aus der Presse entnommen.

Aus den Maßen des behandelten Laminatpakets unter Berücksichtigung des Gewichts der unbehandelten Gewebelagen und des Gewichts des Beschichtungsmittels sowie deren spezifischer Gewichte läßt sich der Volumenanteil der Luft im Laminatpaket errechnen, der hier bei 17 Vol.% liegt.

## Beispiel 3

Gemäß Beispiel 2 wird ein Laminat-Preß-Paket mit 16 Lagen hergestellt, wobei das Paket eine Größe von 400 × 400 mm besitzt. Anschließend wird es vor einem Plastilinblock gemäß den Richtlinien der Polizeiführungsakademie Hiltrup befestigt und einem Beschuß aus 10 m Entfernung mit 9 mm Parabellum-Weichkernmunition mit einer mitteleren Geschwindigkeit von 420 m/sec (entspricht einer Mündungsenergie des Geschosses von 706 Joule) ausgesetzt. Es werden jeweils 10 Schuß abgegeben, wobei jeweils ein Mindestabstand zwischen den einzelnen Treffern einerseits und zum Rand andererseits von 50 mm eingehalten wird.

Es wird festgestellt, daß ein Laminat-Preß-Paket mit 16 Lagen, hergestellt gemäß Beispiel 2, bei einem Beschußwinkel von 90° und von 25° sicher keine Durchschüsse aufweist.

## Vergleichsbeispiel 1

Das Gemäß Beispiel 1 hergestellte Gewebe wird im unbeschichteten Zustand zu einem Beschußpaket verarbeitet, wie dies in Beispiel 3 beschrieben ist. Dabei werden die Gewebelagen ohne Vernähung dicht aufeinandergeschichtet.

Die Beschußbedingungen entsprechen denen von Beispiel 3.

Bei einem Beschußwinkel von 90° sind 26 Lagen erforderlich, um die Schüsse sicher zu halten, während bei einem Beschußwinkel von 25° 30 Lagen erforderlich sind.

## Vergleichsbeispiel 2

Vergleichsbeispiel 1 wird wiederholt, wobei jedoch die Gewebelagen in einem Abstand von 30 × 30 mm in Gitternetz gemäß DE-OS 29 31 110 analog zur Körperform vernäht werden.

Es wird festgestellt, daß bei einem Beschußwinkel von 90° (25°) 22 (26) Lagen erforderlich sind.

## Vergleichsbeispiel 3

Das Gewebe gemäß Beispiel 1 wird mit 50 g/m² Bindemittel versehen (19 Gew.-%ige Auflage).

Danach wird ein Laminat gemäß Beispiel 2, jedoch mit einem Druck von 56 bar hergestellt.

Als Ergebnis des gemäß Beispiel 3 durchgeführten Beschußversuches ist festzuhalten, daß von 8 Schüssen (9 mm Parabellum; durchschnittliche Geschwindigkeit 400 m/s) 7 Durchschüsse erhalten wurden.

## Patentansprüche

1. Als Zwischenprodukt vorgesehenes Gewebe zur Herstellung eines geschoßhemmenden Laminats, das aus Aramidfäden, anderen Hochmodulfäden oder gegebenenfalls zum Teil aus anderen synthetischen Fäden besteht, dadurch gekennzeichnet, daß zumindest an einer Oberfläche des Gewebes eine dünne Schicht eines Bindemittels aus einem Thermoplast trocken fixiert ist, so daß die Bindemittelschicht (16) im wesentlichen nur auf den Außenflächen der Fäden (12) angeordnet ist und der Innenraum (22) der Fäden im wesentlichen bindemittelfrei ist.

2. Gewebe nach Anspruch 1, dadurch gekennzeichnet, daß das Bindemittel in einer Menge von 10-15 g/m² vorgesehen ist.

3. Gewebe nach Anspruch 1 oder 2, dadurch gekennzeichnet, daß das Bindemittel aus einer Lösung eines Acrylharzes, die so viskos ist, daß eine Tränkung der Aramidfäden unterbleibt, aufgetragen worden ist und anschließend das in der Lösung enthaltene Lösungsmittel durch Trocknen entfernt worden ist.

4. Geschoßhemmendes Laminat aus einer Vielzahl von untereinander mit Schichten von Bindemitteln verfestigten Gewebelagen, die aus Aramidfäden, anderen Hochmodulfäden oder gegebenenfalls zum Teil aus anderen synthetischen Fäden bestehen, dadurch gekennzeichnet, daß es durch Übereinanderstapeln von mit Bindemittel versehenen Gewebelagen gemäß Anspruch 1-3, Verpressen und anschließendes Erwärmen unter Erweichen des Bindemittels hergestellt worden ist.

5. Laminat nach Anspruch 4, dadurch gekennzeichnet, daß der unbenetzte Kapillaranteil der Fäden wenigstens 60 % beträgt.

6. Laminat nach Anspruch 5, dadurch gekennzeichnet, daß der unbenetzte kapillare Anteil der Fäden wenigstens 75 % beträgt.

7. Laminat nach einem der Ansprüche 4-6, dadurch gekennzeichnet, daß die Aramidfäden eine Dehnungsfähigkeit von 4 % und ein Elastizitätsmodul von 59 GPa aufweisen.

8. Laminat nach einem der Ansprüche 4-7, dadurch gekennzeichnet, daß die Aramidfäden 666 Einzelfilamente aufweisen.

9. Laminat nach einem der Ansprüche 4-8, dadurch gekennzeichnet, daß das Gewebe in Leinwandbindung gewebt ist.

10. Laminat nach Anspruch 9, dadurch gekennzeichnet, daß das Gewebe in möglichst dicht gedrängter Fadeneinstellung gewebt ist.

11. Laminat nach einem der Ansprüche 9 oder 10, dadurch gekennzeichnet, daß das Gewebe jeweils 12 Fäden in Kette und Schuß je cm bei 1100 dtex aufweist.

12. Laminat nach einem der Ansprüche 4-11, dadurch gekennzeichnet, daß der Bindemittelgehalt zwischen je zwei Gewebelagen 20-30 g/m² beträgt.

13. Laminat nach einem der Ansprüche 4-12, dadurch gekennzeichnet, daß es 7-13 Gew.-% Bindemittel, bezogen auf das Laminatpaket, aufweist.

14. Verfahren zur Herstellung eines geschoßhemmenden Laminats aus einer Vielzahl von Gewebelagen, die aus Aramidfäden, anderen Hochmodulfäden oder gegebenenfalls zum Teil aus anderen synthetischen Fäden bestehen, die aneinander mit einem Bindemittel gebunden werden, wobei die mit Bindemittel versehenen Gewebelagen unter Druck gesetzt und anschließend erwärmt werden, dadurch gekennzeichnet, daß zumindest auf eine Oberfläche jeder Gewebelage ein thermoplastisches Bindemittel in gelöster Form aufgetragen wird, und anschließend das Lösungsmittel aus der Schicht entfernt wird, wobei eine nicht-klebrige, trockene und auf der Oberfläche des Gewebes haftende Bindemittelschicht erhalten wird, und daß die so hergestellten Gewebelagen anschließend zu dem Laminat weiterverarbeitet werden.

15. Verfahren nach Anspruch 14, dadurch gekennzeichnet, daß das Laminatpaket bei einer Temperatur von 120-180 °C und bei einem Druck von 3-20 bar in einer Formpresse derart behandelt wird, daß das Bindemittel erweicht und fließfähig wird und dabei eine solche Viskosität aufweist, daß ein Eindringen des Bindemittels in die Fäden im wesentlichen unterbleibt.

16. Verfahren nach Anspruch 14 oder 15, dadurch gekennzeichnet, daß man eine solche Menge Beschichtungsmittel in Lösung aufträgt, daß auf dem Gewebe nach dem Trocknen etwa 10-15 g

Bindemittel/m² zurückbleibt.

17. Verfahren nach einem der Ansprüche 14-16, dadurch gekennzeichnet, daß man selbstvernetzendes Acrylharz, das streichfähig in Lösung oder Dispersion vorliegt, auf das Gewebe aufträgt und daß man anschließend das Lösungsmittel bzw. Wasser völlig heraustrocknet.

### Claims

1. Fabric provided as intermediate product for the production of a bulletproof laminate, said fabric consisting of aramide threads, other high modulus threads or, if necessary, of other synthetic threads, characterized in that at least at one surface of the fabric there is a thin layer of a binder from a thermoplast dry fixed, so that the binder layer (16) is arranged essentially only on the outer surfaces of the threads (12) and that the interior (22) of the threads is substantially free of binder.

2. Fabric according to claim 1, characterized in that the binder is provided in an amount of 10-15 g/cm².

3. Fabric according to claim 1 or 2, characterized in that the binder has been applied from a solution of an acrylic resin being such viscous that an impregnation of the aramide threads is not necessary and that subsequently the solvent contained in the solution has been removed by drying.

4. Bulletproof laminate comprising a plurality of fabric layers, said fabric layers being secured with respect to each other with binders and consisting of aramide threads, other high modulus threads or, if necessary, partially of other synthetic threads, characterized in that it is produced through stacking of fabric layers provided with binder according to claims 1-3, compression and subsequent heating under softening of the binder.

5. Laminate according to claim 4, characterized in that the unwetted capillary proportion of the threads is at least 60 %.

6. Laminate according to claim 5, characterized in that the unwetted capillary proportion is about 75 %.

7. Laminate according to claims 4-6, characterized in that the aramide threads have an extensibility of 4 % and elasticity modulus of 59 GPa.

8. Laminate according to claims 4-7, characterized in that the aramide threads comprise about 666 individual filaments.

9. Laminate according to claims 4-8, characterized in that the fabric is woven with linen weave.

10. Laminate according to claim 9, characterized in that the fabric is woven with the densest possible thread setting.

11. Laminate according to anyone of claims 9 or 10, characterized in that the fabric comprises 12 threads/cm in the warp and weft with 1100 dtex.

12. Laminate according to anyone of claims 4-11, characterized by a binder content of 20-30 g/cm² between every two fabric layers.

13. Laminate according to anyone of claims 4-12, characterized in that said binder comprises 7-13 % by weight binder with respect to the laminate pack.

14. Method of making a bulletproof laminate having a plurality of fabric layers consisting of aramide threads, other high modulus threads or, if necessary, partially other synthetic threads, being bound together by means of a binder with the fabric layers being provided with binder being subjected to pressure and subsequently heated, characterized in that at least to one surface of each fabric layer a dissolved thermoplastic binder is applied and subsequently the solvent is removed from the layer, whereby a non-tacky dry binder layer adhesive on the surface of the fabric is obtained and that the so produced fabric layers are then further processed to the laminate.

15. Method according to claim 14, characterized in that the laminate pack is treated at a temperature of 120-180 °C and under a pressure of 3-20 bar in a mould such that the binder is softened and becomes flowable and hereby comprises such viscosity that a penetration of the binder into the threads is substantially avoided.

16. Method according to claims 14 or 15, characterized in that such amount of dissolved coating agent is applied that on the fabric there remains after drying about 10-15 g binder/m².

17. Method according to anyone of claims 14-16, characterized in that self-crosslinking acrylic resin existing brushably in the solution or dispersion is applied to the fabric and that subsequently the solvent, or respectively water is completely dried out.

### Revendications

1. Tissu prévu à titre de produit intermédiaire pour la fabrication d'un stratifié pour arrêter les projectiles, qui est constitué de fils d'aramide, d'autres fils à haut module ou, le cas échéant, pour partie, d'autres fils synthétiques, caractérisé en ce que, sur au moins une face du tissu, est fixée à sec une mince couche d'un liant en matière thermoplastique, de sorte que la couche de liant (16) n'est disposée essentiellement que sur les surfaces extérieures des fils (12) et que l'espace intérieur (22) des fils est essentiellement dépourvu de liant.

2. Tissu suivant la revendication 1, caractérisé en ce que le liant est prévu en une quantité de 10 à 15 g par m².

3. Tissu suivant la revendication 1 ou 2, caractérisé en ce que le liant a été appliqué à partir d'une solution d'une résine acrylique, dont la viscosité est telle qu'elle n'imprègne pas les fils d'aramide, et le solvant contenu dans la solution a ensuite été éliminé par séchage.

4. Stratifié pour arrêter les projectiles, constitué d'un grand nombre d'épaisseurs de tissu réunies entre elles par des couches de liants et constituées de fils d'aramide, d'autres fils à haut module ou, le cas échéant, pour partie, d'autres fils synthétiques, caractérisé en ce qu'il a été fabriqué par superposition d'épaisseurs de tissu pourvues de liant selon les revendications 1 à 3, par pressage, puis par chauffage avec ramollissement du liant.

5. Stratifié suivant la revendication 4, caractérisé en ce que la fraction capillaire non mouillée des fils est d'au moins 60 %.

6. Stratifié suivant la revendication 5, caractérisé en ce que la fraction capillaire non mouillée des fils est d'au moins 75 %.

7. Stratifié suivant l'une quelconque des revendications 4 à 6, caractérisé en ce que les fils d'aramide ont une ductilité de 4 % et un module d'élasticité de 59 GPa.

8. Stratifié suivant l'une quelconque des revendications 4 à 7, caractérisé en ce que les fils d'aramide comprennent 666 filaments individuels.

9. Stratifié suivant l'une quelconque des revendications 4 à 8, caractérisé en ce que le tissu est tissé en armure toile.

10. Stratifié suivant la revendication 9, caractérisé en ce que le tissu est tissé suivant un compte de chaîne le plus serré possible.

11. Stratifié suivant l'une ou l'autre des revendications 9 et 10, caractérisé en ce que le tissu comprend respectivement 12 fils de chaîne et 12 fils de traîne par cm pour 1100 dtex.

12. Stratifié suivant l'une quelconque des revendications 4 à 11, caractérisé en ce que la quantité de liant séparant chaque fois deux épaisseurs de tissu, est de 20 à 30 g par m².

13. Stratifié suivant l'une quelconque des revendications 4 à 12, caractérisé en ce qu'il comprend de 7 à 13 % en poids de liant, sur base de son paquet de couches.

14. Procédé de fabrication d'un stratifié pour arrêter les projectiles, constitué d'un grand nombre d'épaisseurs de tissu, qui sont faites de fils d'aramide, d'autres fils à haut module ou, le cas échéant, pour partie, d'autres fils synthétiques, et qui sont reliées l'une à l'autre au moyen d'un liant, les épaisseurs de tissu pourvues de liant étant mises sous pression, puis chauffées, caractérisé en ce qu'un liant thermoplastique est appliqué en solution sur au moins une surface de chaque épaisseur de tissu, et le solvant est ensuite éliminé de la couche, de sorte qu'une couche de liant sèche, non poisseuse et adhérant à la surface du tissu est obtenue, et les épaisseurs de tissu ainsi préparées sont ultérieurement traitées pour former le stratifié.

15. Procédé suivant la revendication 14, caractérisé en ce que le paquet de couches du stratifié est traité dans une presse à mouler à une température de 120 à 180 °C et sous une pression de 3 à 20 bars, d'une manière telle que le liant se ramollisse, devienne coulant et présente alors une viscosité telle qu'il n'imprègne en substance pas les fils.

16. Procédé suivant la revendication 14 ou 15, caractérisé en ce qu'on applique une quantité d'agent d'enduction en solution telle, qu'après séchage, environ 10 à 15 g de liant par m² restent sur le tissu.

17. Procédé suivant l'une quelconque des revendications 14 à 16, caractérisé en ce qu'on applique sur le tissu une résine acrylique à autoréticulation qui est présente dans une dispersion ou une solution pouvant être appliquée à la brosse, et on élimine ensuite complètement le solvant ou l'eau par séchage.

Fig. 1

Fig. 2

1